# FASCICULE DE BREVET EUROPEEN

(11) **EP 4 073 411 B1**
(45) Date de publication et mention de la délivrance du brevet: **25.09.2024**
(21) Numéro de dépôt: 20820965.0
(22) Date de dépôt: 11.12.2020
(51) Int. Cl.: F16J 15/00, F16L 11/08, F16L 23/20, F16L 33/01, F16L 33/18, F16L 33/32

(54) **EMBOUT DE CONNEXION ET CONDUITE FLEXIBLE, ASSEMBLAGE ET PROCÉDÉ ASSOCIÉ**
VERBINDUNGSENDSTÜCK UND FLEXIBLES ROHR, ZUSAMMENBAU UND ZUGEHÖRIGES VERFAHREN
CONNECTION END-PIECE AND FLEXIBLE PIPE, ASSEMBLY AND ASSOCIATED METHOD

(30) Priorité: 13.12.2019 FR 1914392
(43) Date de publication de la demande: 19.10.2022
(73) Titulaire: TechnipFMC Subsea France, 92400 Courbevoie (FR)
(72) Inventeur: GONÇALVES DA CRUZ, Cleber, 20910-061 Rio de Janeiro (BR); BAILLY MAGALHAES, Paulo, 24230-253 Rio de Janeiro (BR); DE ARAÚJO BERNARDO, Leonardo, Dunfermline, Scotland KY11 8UD (GB); FAISCA, Andre, 22790702 Rio de Janeiro (BR); DE ARAUJO PEREIRA, Phelippe, 26510-182 Rio de Janeiro (BR); BERNARDO, Renato Saioron, 12702-530 São Judas Tadeu Cruzeiro SP (BR); CALHAU MARTINS, Alexandre Miguel, 22231-090 Rio de Janeiro (BR)
(74) Mandataire: Lavoix
(86) Numéro de dépôt international: PCT/EP2020/085718
(87) Numéro de publication internationale: WO 2021/116381

(56) Documents cités:
- WO-A1-00/22336
- WO-A1-2014/174244
- DE-A1- 3 103 551
- GB-A- 1 267 540
- GB-A- 2 299 837
- GB-A- 351 015

## Description

La présente invention concerne une conduite flexible de transport de fluide, selon le préambule de la revendication 1.

WO0022336 décrit un embout d'une conduite flexible du type précité.

La conduite flexible est en particulier une conduite flexible de type non liée (« unbonded »), destinée au transport d'hydrocarbures à travers une étendue d'eau, tel qu'un océan, une mer, un lac ou une rivière. Elle est par exemple telle que décrite dans les documents normatifs publiés par l'American Petroleum Institute (API), API 17J, 4ème édition - mai 2014 et API RP 17B, 5ème édition - mars 2014.

La conduite est généralement formée d'un ensemble de couches concentriques et superposées. Elle est considérée comme « non liée » au sens de la présente invention, dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant les nappes d'armures de traction.

De telles conduites flexibles sont notamment utilisées comme lignes de production, d'injection d'eau ou de gaz, d'export de gaz, de service, notamment en mer profonde dans l'industrie pétrolière et gazière. Elles s'étendent dans ce cas à travers une étendue d'eau entre une installation de surface et un ensemble de fond ou entre deux ensembles de fond. Ces lignes peuvent également s'étendre entre deux installations de surface.

L'installation de surface est par exemple une barge, une plateforme semi-submersible, un FPSO (pour « Floating Production Storage and Offloading », soit ensemble de stockage et de déchargement de production flottant), un FLNG (pour « Floating Liquefied Natural Gas », soit ensemble de liquéfaction de gaz naturel flottant), un FSU (pour « Floating Storage Unit », soit unité de stockage flottant), ou un autre ensemble flottant.

Les conduites flexibles comportent généralement une gaine externe de protection définissant un volume intérieur et au moins une gaine interne imperméable aux liquides disposée à l'intérieur du volume intérieur, délimitant un passage de circulation d'un fluide.

La gaine externe de protection et la gaine interne délimitent entre elles un espace annulaire recevant des couches de renfort métallique, en particulier des nappes d'armures de traction et dans certains cas, une voûte de pression.

Ce type de conduite est utilisé pour transporter des mélanges d'hydrocarbures pouvant parfois comporter une forte teneur en gaz corrosifs comme du dioxyde de carbone (CO₂) et/ou du sulfure d'hydrogène (H₂S).

L'espace annulaire contenant la voûte de pression et les nappes d'armures de traction est alors soumis à des gaz acides issus des fluides transportés, qui diffusent au travers de la gaine interne.

En présence d'eau, pouvant provenir de l'eau contenue dans les hydrocarbures transportés ayant migré à travers la gaine interne vers l'espace annulaire, ou provenant de l'étendue d'eau en cas d'une déchirure de la gaine externe, les couches de renforcement métalliques situées dans l'espace annulaire, subissent de la corrosion.

Afin d'éviter une accumulation de gaz dans l'espace annulaire des conduites flexibles, il est possible d'évacuer le gaz présent dans l'espace annulaire au niveau des embouts de connexion de la conduite flexible.

A cet effet, WO00/22336 divulgue un embout permettant de raccorder des conduites flexibles entre elles. L'embout comprend un conduit d'évacuation vers l'extérieur, des fluides ayant diffusé dans l'espace annulaire le long de la conduite flexible. Ainsi, dans le cas d'un assemblage bout à bout de conduites flexibles, les gaz accumulés dans l'espace annulaire sont évacués au niveau de chaque embout de connexion.

Toutefois, un tel assemblage ne donne pas entière satisfaction. En effet, évacuer le gaz dans chaque embout de connexion nécessite de ménager un passage spécifique dans l'embout et de contrôler attentivement l'étanchéité réalisée au niveau de l'embout.

Un but de la présente invention est de fournir un embout de conduite flexible permettant un assemblage simple et fiable avec un autre embout, tout en simplifiant, le cas échéant, l'évacuation des gaz présents dans l'espace annulaire de la conduite flexible.

A cet effet, l'invention a pour objet une conduite flexible selon la revendication 1.
L'invention a également pour objet un assemblage de conduites flexibles selon la revendication 11 ou 12.
L'invention a enfin pour objet un procédé d'évacuation de gaz diffusant à travers les gaines tubulaires d'un assemblage de conduites flexibles, selon la revendication 13.

L'invention sera mieux comprise à la lecture de la description qui va suivre, donnée uniquement à titre d'exemple, et faite en se référant aux dessins annexés, sur lesquels :
- la figure 1 est une vue schématique d'un assemblage de conduites flexibles selon l'invention ;
- la figure 2 est une vue en perspective partiellement écorchée d'un tronçon central d'une conduite flexible de l'assemblage de la figure 1;
- la figure 3 est une vue schématique simplifiée, prise en coupe suivant un plan axial médian, des parties pertinentes des embouts d'un assemblage de conduites flexibles selon l'invention ; et
- la figure 4 est une vue d'un détail marqué IV de la figure 3 ;
- la figure 5 est une vue analogue à la figure 4 d'un autre assemblage de conduites flexibles ;
- la figure 6 est une vue d'une section transverse d'un joint principal d'étanchéité de l'assemblage de la figure 4 ;
- la figure 7 est une vue d'une section transverse d'un joint secondaire d'étanchéité de l'assemblage de la figure 4.

Dans tout ce qui suit, les termes « extérieur » et « intérieur » s'entendent généralement de manière radiale par rapport à un axe A-A' de la conduite, le terme « extérieur » s'entendant comme relativement plus éloigné radialement de l'axe A-A' et le terme « intérieur » s'étendant comme relativement plus proche radialement de l'axe A-A' de la conduite.

Les termes « avant » et « arrière » s'entendent de manière axiale par rapport à un axe A-A' de la conduite, le terme « avant » s'entendant comme relativement plus éloigné du milieu de la conduite et plus proche d'une de ses extrémités, le terme « arrière » s'entendant comme relativement plus proche du milieu de la conduite et plus éloigné d'une de ses extrémités. Le milieu de la conduite est le point de la conduite situé à égale distance des deux extrémités de cette dernière.

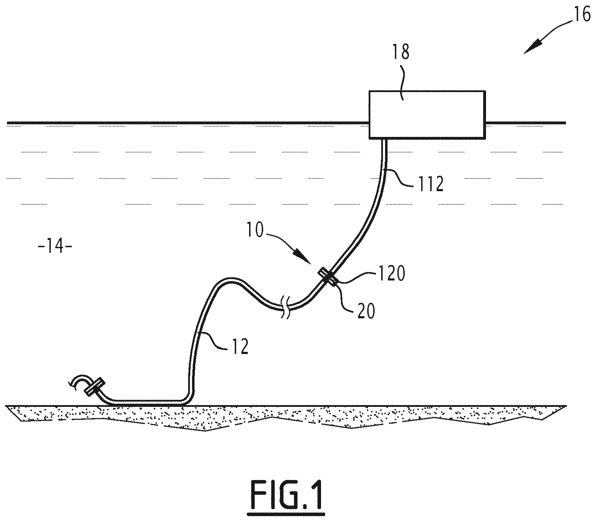

La figure 1 présente un assemblage 10 de conduites flexibles 12, 112 montées bout-à-bout par l'intermédiaire d'embouts 20, 120 de connexion selon l'invention.

L'assemblage 10 est destiné à être disposé à travers une étendue d'eau 14 au sein d'une installation 16 d'exploitation de fluide, notamment d'hydrocarbures.

L'étendue d'eau 14 est par exemple, une mer, un lac ou un océan. La profondeur de l'étendue d'eau 14 au droit de l'installation d'exploitation de fluide 16 est par exemple comprise entre 5 m et 4000 m.

L'installation d'exploitation de fluide 16 comporte ici un ensemble de surface 18, notamment flottant, et un ensemble de fond (non représenté), qui sont raccordés entre eux par l'assemblage 10.

En variante, l'assemblage 10 de conduites flexibles 12, 112 est situé entre deux ensembles de fond sous la surface de l'étendue d'eau 14, avantageusement en appui sur le fond de l'étendue d'eau 14, ou entre deux ensembles de surface.

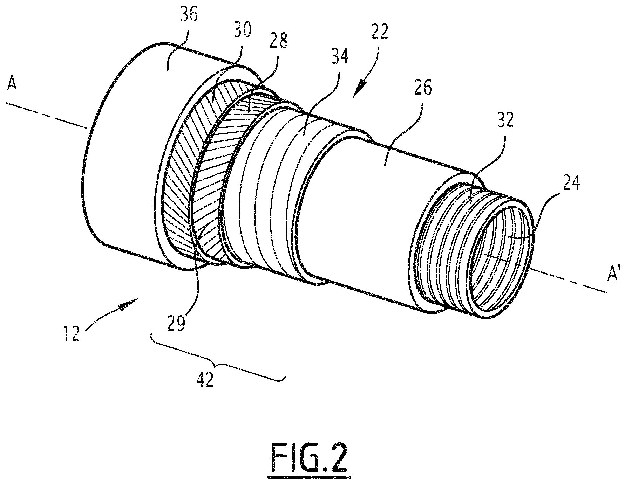

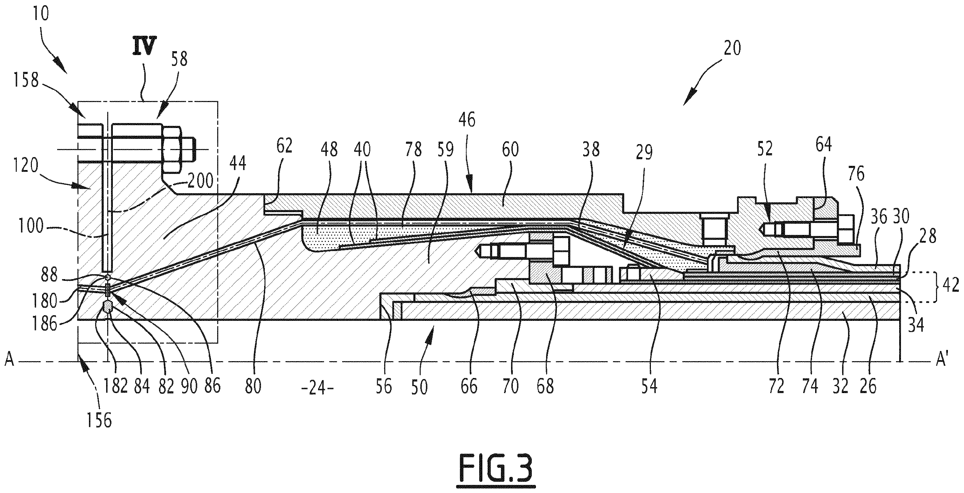

Chaque conduite flexible 12, 112 de l'assemblage 10 comporte un tronçon central 22 illustré en partie sur la figure 2. Elle comporte, à chacune des extrémités axiales du tronçon central 22, un embout d'extrémité 20 (non visible sur la Figure 2) dont les parties pertinentes sont représentées sur la figure 3.

En référence à la figure 2, chaque conduite flexible 12 délimite un passage central 24 de circulation d'un fluide, avantageusement d'un fluide pétrolier. Le passage central 24 s'étend suivant un axe A-A', entre l'extrémité amont et l'extrémité aval de la conduite flexible 12. Il débouche à travers les embouts 20 de la conduite flexible 12.

La conduite flexible 12 est de préférence une conduite « non liée » (désignée par le terme anglais « unbonded »).

Au moins deux couches adjacentes de la conduite flexible 12 sont libres de se déplacer longitudinalement l'une par rapport à l'autre lors d'une flexion de la conduite. Avantageusement, toutes les couches de la conduite flexible 12 sont libres de se déplacer l'une par rapport à l'autre.

Une telle conduite flexible 12 est par exemple décrite dans les documents normatifs publiés par l'American Petroleum Institute (API), API 17J, 4ème édition - mai 2014 et API RP 17B, 5ème édition - mars 2014.

Comme illustré par la figure 2, la conduite flexible 12 délimite une pluralité de couches concentriques autour de l'axe A-A', qui s'étendent continûment le long du tronçon central 22 jusqu'aux embouts 20 situés aux extrémités de la conduite.

En référence à la figure 2, la conduite flexible 12 comporte au moins une première gaine tubulaire 26 à base de matériau polymère constituant avantageusement une gaine de pression.

La conduite flexible 12 comporte en outre au moins une couche d'armures de traction 28, 30 disposée extérieurement par rapport à la première gaine 26.

Avantageusement, et selon l'utilisation souhaitée, la conduite flexible 12 comporte en outre une carcasse interne 32 disposée à l'intérieur de la gaine de pression 26, une voûte de pression 34 intercalée entre la gaine de pression 26 et la ou les couches d'armures de traction 28, 30 et une gaine externe 36, destinée à la protection de la conduite flexible 12.

De manière connue, la gaine de pression 26 est destinée à confiner de manière étanche le fluide transporté dans le passage central 24. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF).

En variante, la gaine de pression 26 est formée à base d'un polymère haute performance tel qu'un polyaryléthercétone (PAEK) tel que le polyéthercétone (PEK), le polyétheréthercétone (PEEK), le polyétheréthercétonecétone (PEEKK), le polyéthercétonecétone (PEKK) ou le polyéthercétoneéthercétonecétone (PEKEKK), le polyamide-imide (PAl), le polyéther-imide (PEI), le polysulfone (PSU), le polyphénylsulfone (PPSU), le polyéthersulfone (PES) , le polyarylsulfone (PAS), le polyphénylèneéther (PPE), le polysulfure de phénylène (PPS) les polymères à cristaux liquides (LCP), le polyphtalamide (PPA), les dérivés fluorés tels que le polytétrafluoroéthylène (PTFE), le perfluoropolyéther (PFPE), le perfluoroalkoxy (PFA) ou l'éthylène chlorotrifloroethylène (ECTFE) et/ou leurs mélanges.

L'épaisseur de la gaine de pression 26 est par exemple comprise entre 5 mm et 20 mm.

La carcasse 32, lorsqu'elle est présente, est formée par exemple d'un feuillard métallique profilé, enroulé en spirale. Les spires du feuillard sont avantageusement agrafées les unes aux autres, ce qui permet de reprendre les efforts radiaux d'écrasement.

Dans cet exemple, la carcasse 32 est disposée à l'intérieur de la gaine de pression 26. La carcasse 32 est en contact avec le fluide pétrolier. La conduite est alors désignée par le terme anglais « rough bore » en raison de la géométrie de la carcasse 32.

En variante (non représentée), la conduite flexible 12 est dépourvue de carcasse interne 32, elle est alors désignée par le terme anglais « smooth bore ».

L'enroulement hélicoïdal du feuillard métallique profilé formant la carcasse 32 est à pas court, c'est-à-dire qu'il présente un angle d'hélice de valeur absolue proche de 90°, typiquement compris entre 75° et 90°.

Le feuillard métallique est par exemple formé à base d'un acier inoxydable tel qu'un acier inoxydable austénitique ou un acier duplex ou à base d'un alliage base nickel ou encore d'un acier au carbone.

Dans cet exemple, la voûte de pression 34 est destinée à reprendre les efforts liés à la pression régnant à l'intérieur de la gaine de pression 26. Elle limite les risques d'éclatement de la conduite flexible 12. Elle est par exemple formée d'un fil profilé métallique entouré en hélice autour de la gaine de pression 26. Le fil profilé présente généralement une géométrie complexe, notamment en forme de Z, de T, de U, de K, de X ou de I.

La voûte de pression 34 est enroulée en hélice à pas court autour de la gaine de pression 26, c'est-à-dire avec un angle d'hélice de valeur absolue proche de 90°, typiquement compris entre 75° et 90°.

La conduite flexible 12 selon l'invention comprend au moins une couche d'armures 28, 30 formée d'un enroulement hélicoïdal d'au moins un élément d'armure 29 allongé.

Dans l'exemple représenté sur la figure 2, la conduite flexible 12 comporte une pluralité de couches d'armures 28, 30, notamment une couche d'armures intérieure 28, appliquée sur la voûte de pression 34 (ou sur la gaine de pression 26 lorsque la voûte 34 est absente) et une couche d'armures extérieure 30 autour de laquelle est disposée la gaine externe 36.

Chaque couche d'armures 28, 30 comporte des éléments d'armure 29 longitudinaux enroulés à pas long autour de l'axe A-A' de la conduite.

Par « enroulé à pas long », on entend que la valeur absolue de l'angle d'hélice est inférieure à 60°, et est typiquement comprise entre 10° et 60°, notamment entre 25° et 55°.

Les éléments d'armure 29 d'une première couche 28 sont enroulés généralement suivant un angle opposé par rapport aux éléments d'armure 29 d'une deuxième couche 30. Ainsi, si l'angle d'enroulement des éléments d'armure 29 de la première couche 28 est égal à + α, α étant compris entre 10° et 60°, l'angle d'enroulement des éléments d'armure 29 de la deuxième couche d'armure 30 disposée au contact de la première couche d'armures 28 est par exemple égal à - α.

Les éléments d'armure 29 sont par exemple formés par des fils métalliques, notamment des fils en acier, ou par des rubans en matériau composite, par exemple des rubans renforcés de fibres de carbone.

Comme illustré par la figure 3, les éléments d'armure 29 présentent chacun un tronçon d'extrémité 38 introduit dans l'embout 20. Le tronçon d'extrémité 38 s'étend jusqu'à une extrémité libre 40 disposée dans l'embout 20. Il présente avantageusement une trajectoire hélicoïdale ou pseudo-hélicoïdale d'axe A-A' dans l'embout 20.

La gaine externe 36 est destinée à empêcher la perméation de fluide depuis l'extérieur de la conduite flexible vers l'intérieur. Elle est avantageusement réalisée en matériau polymère, notamment à base d'un polyoléfine, tel que du polyéthylène, à base d'un polyamide, tel que du PA11 ou du PA12, ou à base d'un polymère fluoré tel que du polyfluorure de vinylidène (PVDF) ou à base d'un thermoplastique élastomère.

L'épaisseur de la gaine externe 36 est par exemple comprise entre 5 mm et 15 mm.

La première gaine 26 et la gaine externe 36 définissent entre elles un espace annulaire 42 visible sur les figures 2 et 3. L'espace annulaire 42 est susceptible de recevoir un mélange gazeux ayant traversé la première gaine 26, et/ou de l'eau ayant traversé la gaine externe 36 lors d'une détérioration mécanique de la gaine externe 36.

Le fluide présent dans l'espace annulaire 42 est apte à migrer dans l'embout 20.

Comme illustré par la figure 3, chaque embout 20 comporte une voûte d'extrémité 44 et un capot extérieur de liaison 46 faisant saillie axialement vers l'arrière à partir de la voûte 44. Le capot 46 délimite, avec la voûte d'extrémité 44, et avec un tronçon avant de la gaine de pression 26, une chambre 48 de réception des extrémités libres 40 des éléments d'armure 29.

L'embout 20 comporte en outre un ensemble avant 50 d'étanchéité autour du tronçon avant de la gaine de pression 26, représenté schématiquement sur la figure 3, et un ensemble arrière 52 d'étanchéité autour d'une région avant de la gaine externe 36.

Dans cet exemple, l'embout 20 comporte en outre un organe annulaire 54 de guidage des tronçons d'extrémité 38.

Dans cet exemple, la voûte d'extrémité 44 est destinée à raccorder la conduite flexible 12 à un autre embout de connexion 120 ou à des équipements terminaux. Elle comporte une bride d'extrémité 58 et une jupe arrière 59 de support des tronçons d'extrémités 38.

La voûte d'extrémité 44 définit une lumière centrale interne 56, d'axe A-A' destinée à recevoir l'extrémité de la première gaine 26 et à permettre l'écoulement du fluide circulant à travers le passage central 24 vers l'extérieur de la conduite flexible 12.

Le capot 46 comporte une paroi périphérique 60 tubulaire s'étendant autour de l'axe A-A'. La paroi périphérique 60 présente un bord avant 62 fixé sur la voûte d'extrémité 44, à l'écart radialement des couches d'armures 28, 30 et un bord arrière 64 s'étendant axialement vers l'arrière au-delà de la voûte d'extrémité 44.

Le capot 46 délimite la chambre 48 radialement vers l'extérieur. Une face arrière de la voûte d'extrémité 44 délimite axialement la chambre 48 vers l'avant.

L'ensemble avant d'étanchéité 50 est avantageusement situé à l'avant de l'embout 20, en contact avec la voûte d'extrémité 44, en étant décalé axialement vers l'avant par rapport à l'ensemble arrière d'étanchéité 52.

De manière connue, l'ensemble avant d'étanchéité 50 comporte une bague avant 66 de sertissage, destinée à venir en prise sur la gaine de pression 26.

Dans l'exemple représenté sur la figure 3, dans lequel la conduite flexible 12 comporte une voûte de pression 34, l'ensemble avant d'étanchéité 50 comporte en outre une bague intermédiaire 68 d'arrêt de la voûte de pression 34, et une cale 70 de maintien axial de la voûte 34, interposée entre la bague avant de sertissage 66 et la bague intermédiaire 68.

L'ensemble arrière d'étanchéité 52 est disposé à l'arrière de l'organe annulaire de maintien 54. Il comporte au moins une bague arrière de sertissage 72 sertissant la gaine externe 36.

Dans cet exemple, l'ensemble arrière d'étanchéité 52 comporte en outre une canule 74 de support de la gaine externe d'étanchéité 36, afin d'intercaler l'extrémité de la gaine externe 36 entre la bague arrière de sertissage 72 et la canule 74. L'ensemble arrière d'étanchéité 52 comprend en outre une bague arrière d'arrêt 76.

L'embout 20 comporte en outre avantageusement un matériau 78 de remplissage solide, tel qu'une résine polymérique thermodurcissable de type epoxy, disposée dans la chambre 48 autour de la voûte d'extrémité 44 et autour des tronçons d'extrémité 38 des éléments d'armure 29.

Le matériau 78 remplit sensiblement totalement la chambre 48. Il est de préférence injecté de manière fluide dans la chambre 48 et se solidifie dans celle-ci, en liant les tronçons d'extrémité 38 des éléments d'armure 29 à la voûte d'extrémité 44 et/ou au capot 46.

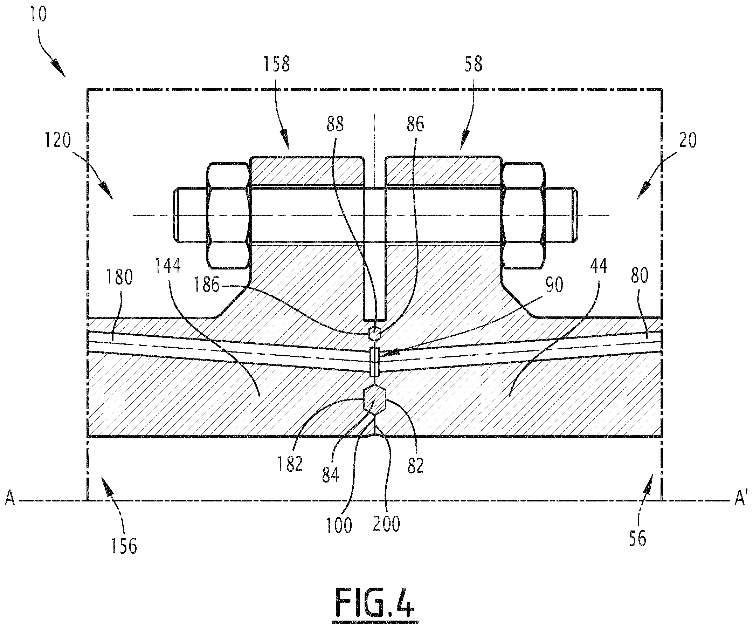

Comme représenté sur les figures 3 et 4, la bride d'extrémité 58 présente une face de connexion 100 propre à s'appliquer sur une face opposée 200 d'une bride d'extrémité 120 d'une autre conduite flexible 112.

La face de connexion 100 s'étend transversalement à l'avant de la bride d'extrémité 58. La lumière interne 56 débouche vers l'avant au centre de la face de connexion 100.

La bride d'extrémité 58 définit, dans la face de connexion 100, autour de la lumière interne 56, un logement principal 82 en forme d'anneau d'axe A-A', accueillant un joint principal 84 d'étanchéité.

Dans cet exemple, la bride d'extrémité 58 définit aussi avantageusement un logement secondaire 86 en forme d'anneau d'axe A-A', accueillant un joint secondaire 88 d'étanchéité. Le logement secondaire 86 est situé à l'extérieur du logement principal 82, de manière concentrique au logement principal 82.

Comme visible sur les figures 3 et 4, le joint principal d'étanchéité 84 présente une section transverse polygonale, ayant de préférence au moins quatre côtés, dans au moins un plan axial médian passant par l'axe A-A'. Avantageusement, la section transverse du joint 84 est hexagonale.

Dans le plan axial médian, lorsque le joint principal d'étanchéité 84 est disposé dans le logement principal 82, deux sommets opposés du polygone définissant la section transverse du joint principal 84 affleurent avantageusement la face de connexion 100.

Le joint secondaire 88 est disposé concentriquement à l'extérieur du joint principal 84.

Comme visible sur les figures 3 et 4, le joint secondaire d'étanchéité 88 présente aussi une section transverse polygonale ayant de préférence au moins quatre côtés, dans au moins un plan axial médian passant par l'axe A-A'. Avantageusement, la section transverse du joint 88 est hexagonale.

Dans le plan axial médian, lorsque le joint secondaire d'étanchéité 88 est disposé dans le logement secondaire 86, deux sommets opposés du polygone définissant la section transverse du joint secondaire 88 affleurent avantageusement la face de connexion 100.

L'aire de la section transverse du joint principal 84 est supérieure à l'aire de la section transverse du joint secondaire 88.

Par exemple, l'aire de la section transverse du joint principal 84 est comprise entre 300 mm² et 500 mm², préférentiellement entre 350 mm² et 450 mm² et l'aire de la section transverse du joint secondaire 88 est comprise entre 60 mm² et 80 mm², préférentiellement entre 65 mm² et 75 mm².

Les joints d'étanchéité 84, 88 sont avantageusement fabriqués en métal, notamment en acier tel qu'un acier inoxydable, un acier au carbone. Le joint secondaire 88 est par exemple réalisé en alliage 825 et le joint principal 84 est par exemple réalisé en alliage Inconel 625 ou en acier inoxydable 316L.

Avantageusement, les joints d'étanchéité 84, 88 comprennent un revêtement métallique.

L'embout 20 délimite ici au moins un conduit 80 d'évacuation de gaz. Le conduit d'évacuation 80 est raccordé à l'arrière à l'espace annulaire 42. Il débouche vers l'avant dans la face de connexion 100 entre le joint principal 84 et le joint secondaire 88.

Le conduit d'évacuation 80 comprend avantageusement au moins un tronçon ménagé à travers la voûte d'extrémité 44 de l'embout 20, s'étendant successivement à travers la jupe arrière 59 et à travers la bride 58.

L'assemblage 10 de conduites flexibles représenté sur la figure 4 comporte la première conduite flexible 12 telle que décrite précédemment et une conduite flexible additionnelle 112 présentant un tronçon principal additionnel (non représenté) et un embout additionnel 120.

Le tronçon principal additionnel comprend au moins une gaine tubulaire additionnelle, et au moins une couche d'armures de traction additionnelle disposée extérieurement par rapport à la gaine tubulaire additionnelle, la couche d'armures comprenant une pluralité d'éléments d'armures filiformes. Il présente avantageusement une structure identique à celle du tronçon principal de la conduite flexible 12.

L'embout additionnel 120 comporte une voûte d'extrémité 144 et un capot extérieur de liaison (non visible sur la figure 4) faisant saillie axialement vers l'arrière à partir de la voûte d'extrémité 144. Le capot délimite, avec la voûte d'extrémité 144, une chambre de réception des extrémités libres des éléments d'armure de la conduite flexible additionnelle.

L'embout additionnel 120 comporte en outre un ensemble avant d'étanchéité autour de la gaine de pression de la conduite flexible additionnelle, et un ensemble arrière d'étanchéité (non représenté) autour de la gaine externe de la conduite flexible additionnelle.

L'embout additionnel présente de préférence une structure identique à celle de l'embout 20.

L'embout additionnel 120 définit une lumière additionnelle 156, destinée à déboucher dans la lumière 56 de l'embout 20.

Il comporte une bride d'extrémité additionnelle 158 présentant une face de connexion additionnelle 200, propre à s'appliquer sur la face opposée 100 de la bride d'extrémité 58 de la conduite flexible 12.

La bride d'extrémité additionnelle 158 présente, dans la face de connexion 200, un logement principal additionnel 182 en forme d'anneau d'axe A-A', propre à accueillir le joint principal 84 d'étanchéité. Dans cet exemple, la bride d'extrémité 158 présente aussi avantageusement un logement secondaire 186 en forme d'anneau d'axe A-A', propre à accueillir le joint secondaire 88 d'étanchéité.

Dans l'assemblage 10, la bride 58 de l'embout 20 est appliquée sur la bride additionnelle 158 de l'embout additionnel 120. Les faces de connexion 100 et 200 sont en contact. Les logements principaux 82, 182 sont disposés en regard l'un de l'autre, de même que les logements secondaires 86, 186.

Le joint d'étanchéité principal 84 est interposé de manière étanche entre la bride 58 et la bride additionnelle 158. Il est reçu dans les logements principaux 82, 182 en regard et réalise une étanchéité radiale au niveau du plan transverse d'interface entre les faces 100, 200.

De même, le joint d'étanchéité secondaire 88 est interposé de manière étanche entre la bride 58 et la bride additionnelle 158. Il est reçu dans les logements secondaires 86, 186 en regard et réalise une étanchéité radiale au niveau du plan transverse d'interface entre les faces 100, 200.

Ainsi, l'assemblage 10 définit une région annulaire de contact 90 étanche radialement, prise entre les deux faces de connexion 100, 200 et délimitée par les deux joints 84, 88.

Selon l'invention, l'embout additionnel 120 définit aussi un conduit 180 d'évacuation des gaz, raccordé au conduit d'évacuation 80 dans la région de contact étanche 90.

Ainsi, comme visible sur la figure 4, les conduits 80, 180 communiquent entre eux dans la zone de contact 90 . Les gaz évacués de l'espace annulaire 42 de la conduite flexible 12 sont ainsi évacués de manière étanche dans l'espace annulaire additionnel de la conduite flexible additionnelle par l'intermédiaire du conduit d'évacuation additionnel 180.

La zone de contact 90 confine de manière étanche les gaz passant entre les embouts 20, 120, pour permettre le transport de ces gaz le long de l'assemblage 10 de conduites flexibles 12, 112, de préférence jusqu'à l'installation de surface 18.

Un procédé d'évacuation des gaz diffusant à travers les gaines tubulaires 26 d'un assemblage 10 de conduites flexibles 12, 112 va maintenant être décrit.

Dans un premier temps, l'assemblage 10 de conduites flexibles 12, 112 tel que décrit précédemment est réalisé.

A cet effet, les faces de connexion 100, 200 des brides 58, 158 en regard des embouts 20, 120 successifs des conduites flexibles 12, 112 sont fixées l'une sur l'autre, avec interposition d'un joint principal 84 tel que décrit plus haut dans les logements principaux 82, 182 en regard, et avantageusement d'un joint secondaire 88 tel que décrit plus haut, dans les logements secondaires 86, 186 en regard.

Puis, les gaz ayant diffusé à travers la gaine tubulaire 26 de la conduite flexible 12 et collectés dans l'espace annulaire 42 passent dans le conduit d'évacuation 80 présent dans l'embout 20.

Les gaz sont alors conduits jusqu'à la zone de contact 90 entre l'embout 20 et l'embout additionnel 120, entre le joint principal 84 et le joint secondaire 88, assurant l'étanchéité du passage des gaz entre les embouts 20, 120.

Puis, les gaz sont recueillis dans le conduit d'évacuation additionnel 180 de l'embout additionnel 120 et passent dans l'espace annulaire additionnel de la conduite additionnelle.

Avantageusement, si l'assemblage 10 de conduites flexibles 12, 112 comporte plus de deux conduites flexibles, les étapes ci-dessus sont répétées dans les paires d'embouts 20, 120 assemblés successifs jusqu'à l'installation de surface 18, où les gaz sont finalement recueillis.

Grâce à la présence du ou de chaque joint principal 84 à section polygonale, l'assemblage 10 de conduites flexibles 12, 112 selon l'invention est particulièrement étanche au niveau de chaque connexion d'embouts 20, 120, tout en offrant un montage particulièrement simple de l'assemblage 10.

En outre, lorsqu'un joint secondaire 88 à section polygonale est utilisé, une région de contact 90 particulièrement étanche est réalisée de manière simple et fiable, permettant ainsi de transporter de manière étanche les gaz ayant diffusé à travers les gaines tubulaires 26 des conduites flexibles 12, 112 successives de l'assemblage 10.

Les gaz transportés ne s'échappent pas au niveau de chaque embout 20, 120, mais sont convoyés vers l'ensemble de surface 18 où ils sont exclusivement évacués.

Plus généralement, le joint principal 84 et le joint secondaire 88 présentent chacun une dureté inférieure à la dureté des surfaces délimitant respectivement les logements principaux 82, 182, et les logements secondaires 86, 186 qui reçoivent respectivement les joints 84, 88.

Ainsi, le joint principal 84 et le joint secondaire 88 sont propres à se déformer localement au niveau de leur surface de contact avec les surfaces des brides 58, 158 délimitant respectivement les logements principaux 82, 182, et les logements secondaires 86, 186, pour assurer une étanchéité à haute pression.

La dureté maximale Rockwell B du joint principal 84 et la dureté maximale Rockwell B du joint secondaire 88 sont ainsi généralement comprises entre 50 et 95, telle que mesurée par la Norme EN-ISO 6508.

Par ailleurs, la rugosité des surfaces de contact est avantageusement inférieure à 0,8 microns.

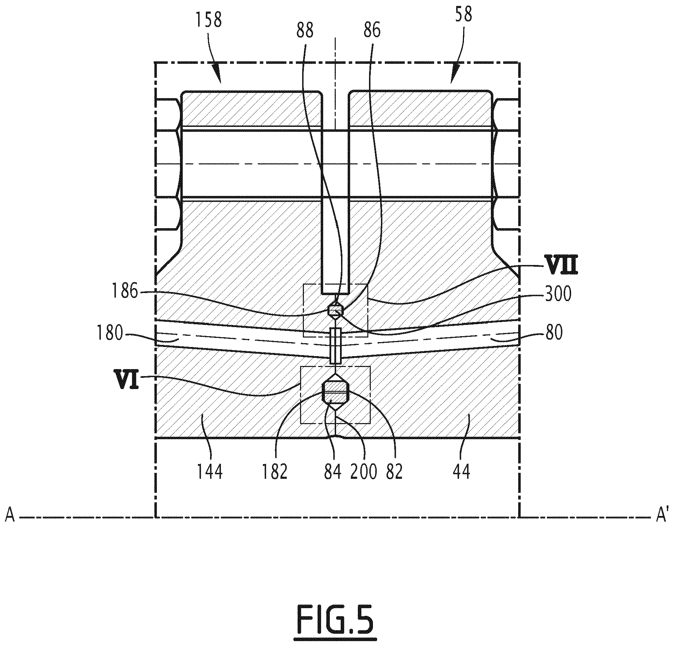

Dans le mode de réalisation illustré par les figures 5 à 7, le joint principal 84 présente, dans un plan passant par l'axe A-A', une section transverse octogonale en forme de carré chanfreiné à ses coins. Le joint secondaire 88 présente aussi, dans un plan passant par l'axe A-A', une section transverse octogonale en forme de rectangle chanfreiné à ses coins, le rectangle étant allongé sur sa longueur le long de l'axe A-A'.

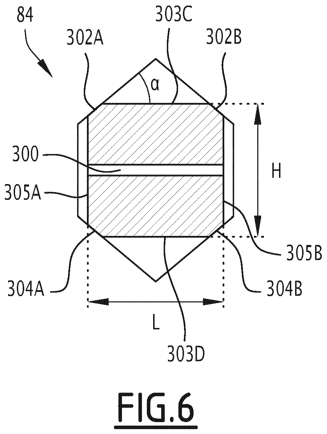

En référence à la figure 6, la section transverse du joint principal 84 délimite ainsi un côté extérieur 303C et un côté intérieur 303D sensiblement parallèles à l'axe central A-A' de la conduite 12, 112. Elle délimite un côté avant 305A et un côté arrière 305B qui s'étendent perpendiculairement au côté extérieur 303C et au côté intérieur 303D.

La hauteur H séparant les côtés 303C, 303D, prise perpendiculairement à l'axe A-A', est ici égale à la longueur L séparant les côtés 305A, 305B, prise parallèlement à l'axe A-A', de sorte que la section transverse est inscrite dans un carré.

La hauteur H et la longueur L sont par exemple comprises entre 15 mm et 26 mm, notamment entre 20 mm et 23 mm.

La section transverse présente, entre le côté extérieur 303C et chacun des côtés avant et arrière 305A, 305B, des segments chanfreinés extérieurs 302A, 302B.

La section transverse présente, entre le côté intérieur 303D et chacun des côtés avant et arrière 305A, 305B, des segments chanfreinés intérieurs 304A, 304B.

La longueur de chaque segment chanfreiné 302A, 302B, 304A, 304B, prise le long de l'axe A-A', est inférieure à la longueur du côté extérieur 303C et à la longueur du côté intérieur 303D.

La hauteur de chaque segment chanfreiné 302A, 302B, 304A, 304B, prise perpendiculairement à l'axe A-A', est inférieure à la hauteur du côté avant 305A et à la hauteur du côté arrière 305B.

L'angle α formé au niveau de chaque segment chanfreiné extérieur 302A, 302B avec une droite passant par le coté extérieur 303C est compris entre 15° et 30°, notamment entre 20° et 25°.

L'angle formé au niveau de chaque segment chanfreiné intérieur 304A, 304B avec une droite passant par le coté intérieur 303D est compris entre 15° et 30°, notamment entre 20° et 25°.

Les segments chanfreinés intérieurs 302A, 302B et les segments chanfreinés extérieurs 304A, 304B sont propres à former des interfaces d'étanchéité destinées à s'appliquer sur les surfaces délimitant les logements 82, 182 pour réaliser une étanchéité au fluide.

Ceci se produit lors du montage de l'assemblage 10. Le joint 84 présente, avant montage, une section légèrement supérieure à celle des deux logements 82, 182, le recevant.

Pendant le montage, le joint 84 se déforme légèrement et les quatre segments chanfreinés 302A, 302B, 304A, 304B sont alors compressées entre les deux brides 58, 158. Une forte pression métal/métal assure alors l'étanchéité au niveau des surfaces du joint 84 engendrées par ces segments 302A, 302B, 304A, 304B.

Les côtés extérieur et intérieur 303C, 303D et les côtés avant et arrière 305A, 305B restent avantageusement au moins en partie à l'écart des surfaces délimitant les logements 82, 182.

Lors de l'utilisation de l'assemblage 10, lorsque du fluide sous pression circule dans le passage central 24, la pression de fluide est transmise au joint principal 84 dont le diamètre augmente. Ceci pousse les segments chanfreinés extérieurs 302A, 302B vers l'extérieur contre les surfaces délimitant les logements 82, 182. La pression de contact augmente au niveau des segments chanfreinés extérieurs 302A, 302B, renforçant l'étanchéité.

Dans certains cas, les segments chanfreinés intérieurs 304A, 304B se détachent des surfaces délimitant les logements 82, 182 autorisant une augmentation de pression dans les logements 82, 182 autour du côté avant 305A et du côté arrière 305B.

Pour éviter de déséquilibrer le joint principal 84, un trou traversant 300 est ménagé sur au moins une section transverse autour de l'axe A-A' entre le côté avant 305A et le côté arrière 305B. Le trou traversant 300 s'étend avantageusement parallèlement à l'axe A-A'.

Le trou traversant 300 débouche axialement de part et d'autre du joint principal 84, en référence à l'axe central A-A'. Ainsi, la pression s'équilibre entre l'avant et l'arrière du joint principal 84, de part et d'autre du côté avant 305A et du côté arrière 305B.

Le joint principal 84 reste donc fermement positionné dans les logements 82, 182.

De préférence, le joint 84 est un joint métallique BX tel que défini par la norme API SPEC 6A « Spécification for Wellhead and Christmas Tree Equipement », 21ème édition, novembre 2018, publiée par l'American Petroleum Institute.

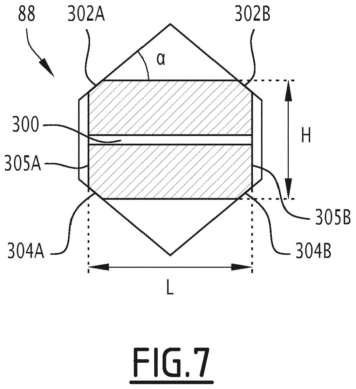

En référence à la figure 7, la section transverse du joint secondaire 88 diffère de celle du joint principal 84 en ce que la hauteur H séparant les côtés 303C, 303D, prise perpendiculairement à l'axe A-A' est ici inférieure à la longueur L séparant les côtés 305A, 305B, prise parallèlement à l'axe A-A', de sorte que la section transverse est inscrite dans un rectangle allongé le long de l'axe A-A'.

Le rapport entre la hauteur H et la longueur L est par exemple compris entre 0,6 et 0,9, de préférence entre 0,7 et 0,9.

La hauteur H est par exemple comprise entre 5 mm et 10 mm, notamment entre 6 mm et 9 mm.

La longueur L est par exemple comprise entre 7 mm et 14 mm, notamment entre 8 mm et 11 mm.

Lors de l'utilisation de l'assemblage 10, lorsque l'assemblage 10 est immergé dans l'étendue d'eau 14, la pression hydrostatique à l'extérieur de l'assemblage 10 est transmise au joint secondaire 88 dont le diamètre diminue. Ceci pousse les segments chanfreinés intérieurs 304A, 304B vers l'intérieur contre les surfaces délimitant les logements 86, 186. La pression de contact augmente au niveau des segments chanfreinés intérieurs 304A, 304B renforçant l'étanchéité.

Dans certains cas, les segments chanfreinés extérieurs 302A, 302B se détachent des surfaces délimitant les logements 86, 186 autorisant une augmentation de pression dans les logements 86, 186 autour du côté avant 305A et du côté arrière 305B.

Pour éviter de déséquilibrer le joint secondaire 88, un trou traversant 300 est aussi ménagé sur au moins une section transverse autour de l'axe A-A' entre le côté avant 305A et le côté arrière 305B, avantageusement parallèlement à l'axe A-A'.

L'utilisation de joints d'étanchéité 84, 88 de section transverse octogonale garantit une tenue en pression très élevée, notamment par l'effet de renforcement de l'étanchéité sous l'effet de la pression du fluide ou de l'étendue d'eau 14. D'une manière surprenante, il est possible de garantir une tenue en pression élevée simultanément pour les deux joints 84, 88 de section transverse octogonale par un simple serrage des brides 58, 158, en conservant une géométrie identique pour les logements 82, 182, 86, 186 sur chaque bride 58, 158, assurant un montage standardisé.

La présence d'interfaces d'étanchéité circonférentielles formées par les surfaces générées par les segments chanfreinés 302A, 302B, 304A, 304B diminue le risque de dommage des logements 82, 182, 86, 186 les recevant. Ceci simplifie le montage par rapport à des joints classiques en forme de O.

## Revendications

1. Conduite flexible (12), comprenant une gaine tubulaire (26), et au moins une couche (28, 30) d'armures de traction disposée extérieurement par rapport à la gaine tubulaire (26), la couche d'armures (28,30) comprenant une pluralité d'éléments d'armures filiformes (29), la conduite flexible (12) comportant au moins un embout de connexion (20), l'embout (20) comportant :
- une voûte d'extrémité (44) présentant une lumière interne (56) de circulation de fluide d'axe central (A-A'), destinée à déboucher dans le passage de circulation (24), la voûte d'extrémité (44) comportant une bride d'extrémité (58) destinée au raccordement à un autre embout (120) ; et
- au moins un joint d'étanchéité (84) en forme d'anneau d'axe central (A-A'), le joint d'étanchéité (84) étant logé dans la bride d'extrémité (58) autour de la lumière interne (56),
**caractérisée en ce que** le ou chaque joint d'étanchéité (84) présente une section transverse polygonale.

2. Conduite flexible (12) selon la revendication 1, comprenant un joint principal d'étanchéité (84) en forme d'anneau d'axe central (A-A') présentant une section transverse polygonale et au moins un joint secondaire d'étanchéité (88) en forme d'anneau d'axe central (A-A'), disposé concentriquement à l'extérieur du joint principal d'étanchéité (84), l'embout (20) délimitant au moins un conduit d'évacuation (80) de gaz débouchant dans la bride d'extrémité (58) entre le joint principal d'étanchéité (84) et le joint secondaire d'étanchéité (88).

3. Conduite flexible (12) selon la revendication 2, dans lequel le joint secondaire d'étanchéité (88) présente une section transverse polygonale.

4. Conduite flexible (12) selon la revendication 3, dans lequel le joint principal d'étanchéité (84) présente une section transverse d'aire plus grande que l'aire de la section transverse du joint secondaire d'étanchéité (88).

5. Conduite flexible (12) selon l'une quelconque des revendications 2 à 4, dans lequel le joint principal d'étanchéité (84) ou/et le joint secondaire d'étanchéité (88) présente une section transverse octogonale, la section transverse délimitant un côté extérieur (303C) et un côté intérieur (303D) sensiblement parallèles à l'axe central (A-A') de la conduite (12), un côté avant (305A) et un côté arrière (305B) qui s'étendent perpendiculairement au côté extérieur (303C) et au côté intérieur (303D), la section transverse présentant, entre le côté extérieur (303C) et chacun des côtés avant et arrière (305A, 305B), des segments chanfreinés extérieurs (302A, 302B), la section transverse présentant, entre le côté intérieur (303D) et chacun des côtés avant et arrière (305A, 305B), des segments chanfreinés intérieurs (304A, 304B).

6. Conduite flexible (12) selon la revendication 5, dans lequel, chaque section transverse du joint principal d'étanchéité (84) présente une hauteur séparant les côtés extérieur et intérieur (303C, 303D) égale à la longueur séparant les côtés avant et arrière (305A, 305B), chaque section transverse du joint secondaire d'étanchéité (88) présentant une hauteur séparant les côtés extérieur et intérieur (303C, 303D) inférieure à la longueur séparant les côtés avant et arrière (305A, 305B).

7. Conduite flexible (12) selon l'une quelconque des revendications précédentes, dans lequel un trou traversant (300) est ménagé à travers au moins une section transverse du joint d'étanchéité (84, 88), le trou traversant (300) débouchant axialement de part et d'autre du joint d'étanchéité (84, 88) en référence à l'axe central (A-A').

8. Conduite flexible (12) selon l'une quelconque des revendications précédentes, dans lequel le ou chaque joint d'étanchéité (84, 88) est fabriqué en acier tel qu'un acier inoxydable, un acier au carbone ou un alliage d'acier.

9. Conduite flexible (12) selon l'une quelconque des revendications précédentes, comportant un capot extérieur (46) monté sur la voûte d'extrémité (44) et une région d'extrémité de la gaine tubulaire (26) définissant avec le capot extérieur (46) une cavité de réception (48) des éléments d'armure (29), et un ensemble avant de sertissage (66) de la région d'extrémité de la gaine tubulaire (26).

10. Conduite flexible (12) selon l'une quelconque des revendications précédentes, comportant une gaine externe (36) définissant avec la gaine tubulaire (26) au moins un espace annulaire (42), l'embout de connexion (20) comprenant un joint principal d'étanchéité (84) en forme d'anneau d'axe central (A-A') présentant une section transverse polygonale et au moins un joint secondaire d'étanchéité (88) en forme d'anneau d'axe central (A-A'), disposé concentriquement à l'extérieur du joint principal d'étanchéité (84), l'embout (20) délimitant au moins un conduit d'évacuation (80) de gaz raccordé à l'espace annulaire (42) et débouchant dans la bride d'extrémité (58) entre le joint principal d'étanchéité (84) et le joint secondaire d'étanchéité (88).

11. Assemblage (10) de conduites flexibles (12, 112) comprenant une conduite flexible (12) selon l'une quelconque des revendications précédentes, et une conduite flexible additionnelle (112) comprenant au moins une gaine tubulaire additionnelle et au moins une couche d'armures de traction additionnelle disposée extérieurement par rapport à la gaine tubulaire additionnelle, la couche d'armures comprenant une pluralité d'éléments d'armures filiformes, la conduite flexible additionnelle (112) comportant un embout de connexion additionnel (120) comportant une lumière additionnelle (156) raccordée à la lumière (56) et une bride d'extrémité additionnelle (158) définissant au moins un logement de réception additionnel (182) du ou de chaque joint d'étanchéité (84),
la bride (58) de l'embout (20) étant appliquée sur la bride additionnelle (58) de l'embout additionnel (120), le ou chaque joint d'étanchéité (84) étant interposé dans les logements de réception (58, 158) entre la bride (58) et la bride additionnelle (158).

12. Assemblage (10) selon la revendication 11, dans lequel l'embout (20) comporte un joint principal d'étanchéité (84) en forme d'anneau d'axe central (A-A') présentant une section transverse polygonale et au moins un joint secondaire d'étanchéité (88) en forme d'anneau d'axe central (A-A'), disposé concentriquement à l'extérieur du joint principal d'étanchéité (84), l'embout (20) délimitant au moins un conduit d'évacuation (80) de gaz débouchant dans la bride d'extrémité (58) entre le joint principal d'étanchéité (84) et le joint secondaire d'étanchéité (88),
l'embout additionnel (120) définissant un logement principal additionnel (182) accueillant le joint principal d'étanchéité (84) et un logement secondaire additionnel (186) accueillant le joint secondaire d'étanchéité (88), l'embout additionnel (120) délimitant au moins un conduit d'évacuation additionnel (180) de gaz débouchant dans l'embout (120) entre le joint principal d'étanchéité (84) et le joint secondaire d'étanchéité (88), le conduit d'évacuation additionnel (180) de gaz étant raccordé de manière étanche au conduit d'évacuation (80) de gaz entre le joint principal d'étanchéité (84) et le joint secondaire d'étanchéité (88).

13. Procédé d'évacuation de gaz diffusant à travers les gaines tubulaires (26) d'un assemblage (10) de conduites flexibles (12, 112), le procédé comportant les étapes suivantes :
- fourniture d'un assemblage (10) selon la revendication 12 ;
- passage de gaz dans le conduit d'évacuation de gaz de l'embout (20)
- passage des gaz entre l'embout (20) et l'embout additionnel (120), les gaz étant confinés entre le joint principal d'étanchéité (84) et le joint secondaire d'étanchéité (88) ;
- recueil des gaz dans le conduit d'évacuation additionnel (180) de gaz de l'embout additionnel (120).

## Patentansprüche

1. Flexible Rohrleitung (12), umfassend einen rohrförmigen Mantel (26) und mindestens eine Schicht (28, 30) von Zugbewehrungen umfasst, die außerhalb des rohrförmigen Mantels (26) angeordnet ist, die Bewehrungsschicht (28, 30) umfassend eine Vielzahl von fadenförmigen Bewehrungselementen (29),
die flexible Leitung (12) umfassend mindestens ein Verbindungsendstück (20), das Endstück (20) umfassend:
- ein Endgewölbe (44), das ein inneres Fluidzirkulationslumen (56) mit einer Mittelachse (A-A') aufweist, das dazu bestimmt ist, in den Zirkulationsdurchgang (24) zu münden, das Endgewölbe (44) umfassend einen Endflansch (58), der dazu bestimmt ist, mit einem anderen Endstück (120) verbunden zu werden; und
- mindestens eine ringförmige Dichtung (84) mit einer Mittelachse (A-A'), wobei die Dichtung (84) in dem Endflansch (58) um das innere Lumen (56) herum untergebracht ist,
**dadurch gekennzeichnet, dass** die oder jede Dichtung (84) einen polygonalen Querschnitt aufweist.

2. Flexible Rohrleitung (12) nach Anspruch 1, umfassend eine ringförmige Hauptdichtung (84) mit einer Mittelachse (A-A'), die einen polygonalen Querschnitt aufweist, und mindestens eine Sekundärdichtung (88) in Form eines Rings mit einer Mittelachse (A-A'), die konzentrisch außerhalb der Hauptdichtung (84) angeordnet ist, wobei das Endstück (20) mindestens eine Gasabfuhrleitung (80) begrenzt, die in den Endflansch (58) zwischen der Hauptdichtung (84) und der Sekundärdichtung (88) mündet.

3. Flexible Rohrleitung (12) nach Anspruch 2, wobei die Sekundärdichtung (88) einen polygonalen Querschnitt aufweist.

4. Flexible Rohrleitung (12) nach Anspruch 3, wobei die Hauptdichtung (84) einen Querschnitt mit einer Fläche aufweist, die größer ist als die Fläche des Querschnitts der Sekundärdichtung (88).

5. Flexible Rohrleitung (12) nach einem der Ansprüche 2 bis 4, wobei die Hauptdichtung (84) oder/und die Sekundärdichtung (88) einen achteckigen Querschnitt aufweist, wobei der Querschnitt eine Außenseite (303C) und eine Innenseite (303D) begrenzt, die im Wesentlichen parallel zu der Mittelachse (A-A') der Rohrleitung (12) sind, eine Vorderseite (305A) und eine Rückseite (305B), die sich senkrecht zu der Außenseite (303C) und der Innenseite (303D) erstrecken, wobei der Querschnitt zwischen der Außenseite (303C) und jeder von der Vorder- und der Rückseite (305A, 305B) äußere abgeschrägte Segmente (302A, 302B) aufweist, wobei der Querschnitt zwischen der Innenseite (303D) und jeder von der Vorder- und der Rückseite (305A, 305B) innere abgeschrägte Segmente (304A, 304B) aufweist.

6. Flexible Rohrleitung (12) nach Anspruch 5, wobei jeder Querschnitt der Hauptdichtung (84) eine die Außen- und die Innenseite (303C, 303D) trennende Höhe aufweist, die gleich wie die Länge ist, die die Vorder- und die Rückseite (305A, 305B) trennt, wobei jeder Querschnitt der Sekundärdichtung (88) eine Höhe aufweist, die die Außen- und die Innenseite (303C, 303D) trennt, die geringer ist als die Länge, die die Vorder- und die Rückseite (305A, 305B) trennt.

7. Flexible Rohrleitung (12) nach einem der vorherigen Ansprüche, wobei ein Durchgangsloch (300) durch mindestens einen Querschnitt der Dichtung (84, 88) hindurch gebildet ist, wobei das Durchgangsloch (300) axial auf beiden Seiten der Dichtung (84, 88) in Bezug auf die Mittelachse (A-A') mündet.

8. Flexible Rohrleitung (12) nach einem der vorherigen Ansprüche, wobei die oder jede Dichtung (84, 88) aus Stahl, wie beispielsweise rostfreiem Stahl, Kohlenstoffstahl oder einer Stahllegierung gefertigt ist.

9. Flexible Rohrleitung (12) nach einem der vorherigen Ansprüche, umfassend eine äußere Haube (46), die auf dem Endgewölbe (44) montiert ist, und einen Endbereich des rohrförmigen Mantels (26), der mit der äußeren Haube (46) einen Hohlraum (48) zum Aufnehmen der Bewehrungselemente (29) definiert, und eine vordere Crimpanordnung (66) des Endbereichs des rohrförmigen Mantels (26).

10. Flexible Rohrleitung (12) nach einem der vorherigen Ansprüche, umfassend einen äußeren Mantel (36), der mit dem rohrförmigen Mantel (26) mindestens einen Ringraum (42) definiert, das Verbindungsendstück (20) umfassend eine Hauptdichtung (84) in Form eines Rings mit einer Mittelachse (A-A'), der einen polygonalen Querschnitt aufweist, und mindestens eine Sekundärdichtung (88) in Form eines Rings mit einer Mittelachse (A-A'), die konzentrisch außerhalb der Hauptdichtung (84) angeordnet ist, wobei das Endstück (20) mindestens eine Gasabfuhrleitung (80) begrenzt, die mit dem Ringraum (42) verbunden ist und in den Endflansch (58) zwischen der Hauptdichtung (84) und der Sekundärdichtung (88) mündet.

11. Anordnung (10) aus flexiblen Rohrleitungen (12, 112), umfassend eine flexible Rohrleitung (12) nach einem der vorherigen Ansprüche und eine zusätzliche flexible Rohrleitung (112), umfassend mindestens eine zusätzlichen rohrförmigen Mantel und mindestens eine zusätzliche Zugbewehrungsschicht, die außen in Bezug auf den zusätzlichen rohrförmigen Mantel angeordnet ist, wobei die Bewehrungsschicht eine Vielzahl von fadenförmigen Bewehrungselementen umfasst, die zusätzliche flexible Rohrleitung (112) umfassend ein zusätzliches Verbindungsendstück (120), umfassend ein zusätzliches Lumen (156), das mit dem Lumen (56) verbunden ist, und einen zusätzlichen Endflansch (158), der mindestens einen zusätzlichen Aufnahmesitz (182) der oder jeder Dichtung (84) definiert,
wobei der Flansch (58) des Endstücks (20) an dem zusätzlichen Flansch (58) des zusätzlichen Endstücks (120) anliegt, wobei die oder jede Dichtung (84) in den Aufnahmesitzen (58, 158) zwischen den Flansch (58) und den zusätzlichen Flansch (158) eingefügt ist.

12. Anordnung (10) nach Anspruch 11, wobei das Endstück (20) eine ringförmige Hauptdichtung (84) mit einer Mittelachse (A-A'), die einen polygonalen Querschnitt aufweist, und mindestens eine ringförmige Sekundärdichtung (88) mit einer Mittelachse (A-A') umfasst, die konzentrisch außerhalb der Hauptdichtung (84) angeordnet ist, wobei das Endstück (20) mindestens eine Gasabfuhrleitung (80) begrenzt, die in den Endflansch (58) zwischen der Hauptdichtung (84) und der Sekundärdichtung (88) mündet,
wobei das zusätzliche Endstück (120) eine zusätzliche Hauptaufnahme (182), die die Hauptdichtung (84) aufnimmt, und eine zusätzliche Sekundäraufnahme (186), die die Sekundärdichtung (88) aufnimmt, definiert, wobei das zusätzliche Endstück (120) mindestens eine zusätzliche Gasabfuhrleitung (180) begrenzt, die in das Endstück (120) zwischen der Hauptdichtung (84) und der Sekundärdichtung (88) mündet, wobei die zusätzliche Gasabfuhrleitung (180) dicht mit der Gasabfuhrleitung (80) zwischen der Hauptabdichtung (84) und der Sekundärabdichtung (88) verbunden ist.

13. Verfahren zum Abführen von Gas, das durch die rohrförmigen Mäntel (26) einer Anordnung (10) von flexiblen Rohrleitungen (12, 112) diffundiert, das Verfahren umfassend die folgenden Schritte:
- Bereitstellen einer Anordnung (10) nach Anspruch 12;
- Durchgang von Gas in die Gasabfuhrleitung des Endstücks (20)
- Durchgang von Gasen zwischen dem Endstück (20) und dem zusätzlichen Endstück (120), wobei die Gase zwischen der Hauptdichtung (84) und der Sekundärdichtung (88) eingeschlossen sind;
- Sammeln von Gasen in der zusätzlichen Gasabfuhrleitung (180) des zusätzlichen Endstücks (120).

## Claims

1. A flexible pipe (12) comprising a tubular sheath (26) and at least one layer (28, 30) of tensile armors arranged externally relative to the tubular sheath (26), the layer of armors (28, 30) comprising a plurality of filiform armor elements (29),
the flexible pipe (12) including:
at least one connecting end-piece (20),
the end-piece (20) including:
- an end dome (44) having an internal fluid flow aperture (56) of central axis (A-A'), intended to open into the circulation passage (24), the end dome (44) having an end flange (58) intended for connection to another end-piece (120); and
- at least one ring-shaped seal (84) with a central axis (A-A'), the seal (84) being housed in the end flange (58) around the internal aperture (56), **characterized in that** the or each seal (84) has a polygonal cross-section.

2. The flexible pipe (12) according to claim 1, comprising a main seal (84) in the shape of a ring of central axis (A-A') having a polygonal cross-section and at least one secondary seal (88) in the shape of a ring of central axis (A-A'), arranged concentrically outside the main seal (84), the end-piece (20) delimiting at least one gas discharge duct (80) opening into the end flange (58) between the main seal (84) and the secondary seal (88).

3. The flexible pipe (12) according to claim 2, wherein the secondary seal (88) has a polygonal cross-section.

4. The flexible pipe (12) according to claim 3, wherein the primary seal (84) has a cross-section with a surface area greater than the surface area of the cross-section of the secondary seal (88).

5. The flexible pipe (12) according to any of claims 2 to 4, wherein the primary seal (84) and/or the secondary seal (88) has an octagonal cross-section, the cross-section delimiting an outer side (303C) and an inner side (303D) substantially parallel to the central axis (A-A') of the pipe (12), a front side (305A) and a rear side (305B) which extend perpendicularly to the outer side (303C) and the inner side (303D), the cross-section having, between the outer side (303C) and each of the front and rear sides (305A, 305B), outer chamfered segments (302A, 302B), the cross section having, between the inner side (303D) and each of the front and rear sides (305A, 305B), inner chamfered segments (304A, 304B).

6. The flexible pipe (12) according to claim 5, wherein each cross-section of the main seal (84) has a height separating the outer and inner sides (303C, 303D) equal to the length separating the front and rear sides (305A, 305B), each cross-section of the secondary seal (88) having a height separating the outer and inner sides (303C, 303D) less than the length separating the front and rear sides (305A, 305B).

7. The flexible pipe (12) according to any of the preceding claims, wherein a through hole (300) is provided through at least one cross-section of the seal (84, 88), the through hole (300) opening axially on either side of the seal (84, 88) with reference to the central axis (A-A').

8. The flexible pipe (12) according to any of the preceding claims, wherein the or each seal (84, 88) is made of steel such as stainless steel, carbon steel or alloy steel.

9. The flexible pipe (12) according to any of the preceding claims, comprising an outer cover (46) mounted on the end dome (44) and an end region of the tubular sheath (26) defining with the outer cover (46), a cavity (48) for accommodating the armor elements (29), and a front crimping assembly (66) of the end region of the tubular sheath (26).

10. The flexible pipe (12) according to any of the preceding claims, including an outer sheath (36) defining along with the tubular sheath (26) at least one annular space (42), the connection end-piece (20) comprising a main seal (84) in the shape of a ring with a central axis (A-A') having a polygonal cross-section and at least one secondary seal (88) in the shape of a ring with a central axis (A-A'), arranged concentrically outside the main seal (84), the end-piece (20) delimiting at least one gas discharge duct (80) connected to the annular space (42) and opening into the end flange (58) between the main seal (84) and the secondary seal (88).

11. An assembly (10) of flexible pipes (12, 112) comprising a flexible pipe (12) according to any of the preceding claims, and an additional flexible pipe (112) comprising at least one additional tubular sheath and at least one additional layer of tensile armors arranged externally relative to the additional tubular sheath, the armor layer comprising a plurality of filiform armor elements, the additional flexible pipe (112) including an additional connecting end-piece (120) including an additional aperture (156) connected to the aperture (56) and an additional end flange (158) defining at least one additional accommodation housing (182) for accommodating the or each seal (84),
the flange (58) of the end-piece (20) being applied to the additional flange (58) of the additional end-piece (120), the or each seal (84) being interposed in the accommodation housings (58, 158) between the flange (58) and the additional flange (158).

12. The assembly (10) according to claim 11, wherein the end-piece (20) includes a primary seal (84) in the shape of a ring of central axis (A-A') having a polygonal cross-section and at least one secondary seal (88) in the shape of a ring of central axis (A-A') arranged concentrically outside the primary seal (84), the end-piece (20) delimiting at least one gas discharge duct (80) opening into the end flange (58) between the main seal (84) and the secondary seal (88),
the additional end-piece (120) defining an additional main housing (182) accommodating the main seal (84) and an additional secondary housing (186) accommodating the secondary seal (88), the additional end-piece (120) delimiting at least one additional gas discharge duct (180) opening into the end-piece (120) between the main seal (84) and the secondary seal (88), the additional gas discharge pipe (180) is being connected in a leaktight manner to the gas discharge pipe (80) between the primary seal (84) and the secondary seal (88).

13. A method of discharging gas diffusing through the tubular sheaths (26) of an assembly (10) of flexible pipes (12, 112), the method including the following steps:
- provision of an assembly (10) according to claim 12,
- passage of gas through the gas discharge duct of the end-piece (20)
- passage of gases between the end-piece (20) and the additional end-piece (120), the gases being confined between the main seal (84) and the secondary seal (88);
- collection of the gases in the additional gas discharge duct (180) of the additional end-piece (120).
